(19) Europäisches Patentamt
European Patent Office
Office européen des brevets

(11) **EP 2 672 386 A2**

(12) **EUROPEAN PATENT APPLICATION**

(43) Date of publication:
**11.12.2013 Bulletin 2013/50**

(51) Int Cl.:
**G06F 9/54** (2006.01)

(21) Application number: **13170346.4**

(22) Date of filing: **04.06.2013**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**

(30) Priority: **08.06.2012 KR 20120061640**
**14.05.2013 KR 20130054356**

(71) Applicant: **Samsung Electronics Co., Ltd Gyeonggi-do 443-742 (KR)**

(72) Inventors:
• **Lee, Jun Haeng**
**443-742 Gyeonggi-do (KR)**
• **Ryu, Hyun Surk**
**443-742 Gyeonggi-do (KR)**

(74) Representative: **Land, Addick Adrianus Gosling et al**
**Arnold & Siedsma**
**Sweelinckplein 1**
**2517 GK Den Haag (NL)**

(54) **Apparatus and method for processing asynchronous event information**

(57)     An event information processing apparatus and method are provided that may process an asynchronous event. The event information processing apparatus may include a grouper which groups at least one item of event information generated at an identical time, a time information identifier which identifies basic time information associated with the grouped event information, and an information transmitter which arranges and thereby transmits the grouped event information and basic time information.

**FIG. 1**

**Description**

Methods and apparatuses consistent with exemplary embodiments relate to an apparatus and method for processing an asynchronous event, and more particularly, to an apparatus and method for processing asynchronous event information based on time information periodically generated.

In the case of transmitting measurement information measured by a sensor or image information of a moving picture, a relatively large bandwidth may be required to transmit all of the information.

Accordingly, an asynchronous scheme has been developed which restores current measurement information or image information by transmitting, as event information, only a difference between previous measurement information or image information and current measurement information or image information. This difference information allows a reception side to correct measurement information or image information previously received, based on the event information.

Here, to notify a time at which an event occurs, the related art asynchronous scheme may combine time information, for example, a timestamp, indicating a time at which an event has occurred in the respective event information and then transmit the combined information. Accordingly, the related art asynchronous scheme needs to transmit the number of items of time information corresponding to the number of items of event information.

According to an aspect of an exemplary embodiment, there may be provided an apparatus for processing event information, the apparatus including a grouper which groups  at least one item of event information generated at an identical time, a time information identifier which identifies basic time information associated with the grouped event information, and an information transmitter which arranges and thereby transmits the grouped event information and basic time information.

The event information processing apparatus may further include a time information updater which updates basic time information output during a period of time with accumulated time information, when additional event information is not generated during the period of time.

The time information updater may determine identification information of the accumulated time information based on the number of items of basic time information which are output during the period of time and are accumulated.

According to an aspect of another exemplary embodiment, there may be provided an apparatus for processing event information, the apparatus including a current information type identifier which identifies a type of first information currently generated, a previous information type identifier which identifies a type of second information generated prior to the first information, and an information transmitter which transmits the first information based on whether the type of first information is identical to the type of second information.

When the type of first information is event information, and when the type of second information is time information, the information transmitter may verify whether the second information is accumulated time information in which basic time information output during a period of time is accumulated, and then transmit the first information.

When the second information is the accumulated time information, the information transmitter may initially transmit the second information prior to transmitting the first information and change the second information as basic time information.

When the type of first information and the type of second information are time information, the information transmitter may accumulate the first information and the second information and thereby update accumulated time information.

According to an aspect of another exemplary embodiment, there may be provided a method of processing event information, the method including grouping at least one item of event information generated at an identical time, identifying basic time information associated with the grouped event information, and arranging and thereby transmitting the grouped event information and basic time information.

According to an aspect of another exemplary embodiment, there may be provided a method of processing event information, the method including identifying a type of first information currently generated, identifying a type of second information generated prior to the first information, and transmitting the first information based on whether the type of first information is identical to the type of second information.

BRIEF DESCRIPTION OF THE DRAWINGS

FIG. 1 is a block diagram illustrating an event information processing system according to an exemplary embodiment;
FIG. 2 is a block diagram illustrating a structure of an event information processing apparatus according to an exemplary embodiment;
FIG. 3 is a diagram illustrating an example of information transmitted by an event information processing apparatus according to an exemplary embodiment;

FIG. 4 is a diagram illustrating an example of a process of updating time information at an event information processing apparatus according to an exemplary embodiment;

FIG. 5 is a diagram illustrating an example of event information and time information according to an exemplary embodiment;

FIG. 6 is a block diagram illustrating a structure of an event information processing apparatus according to another exemplary embodiment;

FIG. 7 is a flowchart illustrating a method of processing event information according to an exemplary embodiment;

FIG. 8 is a flowchart illustrating a method of processing event information according to another exemplary embodiment; and

FIG. 9 is a flowchart illustrating an operation of processing time information of FIG. 8.

DETAILED DESCRIPTION

The following detailed description is provided to assist the reader in gaining a comprehensive understanding of the methods, apparatuses, and/or systems described herein. Accordingly, various changes, modifications, and equivalents of the methods, apparatuses, and/or systems described herein will be suggested to those of ordinary skill in the art. The progression of processing steps and/or operations described is an example; however, the  sequence of and/or operations is not limited to that set forth herein and may be changed as is known in the art, with the exception of steps and/or operations necessarily occurring in a particular order. In addition, respective descriptions of well-known functions and constructions may be omitted for increased clarity and conciseness.

Throughout the drawings and the detailed description, unless otherwise described, the same drawing reference numerals will be understood to refer to the same elements, features, and structures. The relative size and depiction of these elements may be exaggerated for clarity, illustration, and convenience.

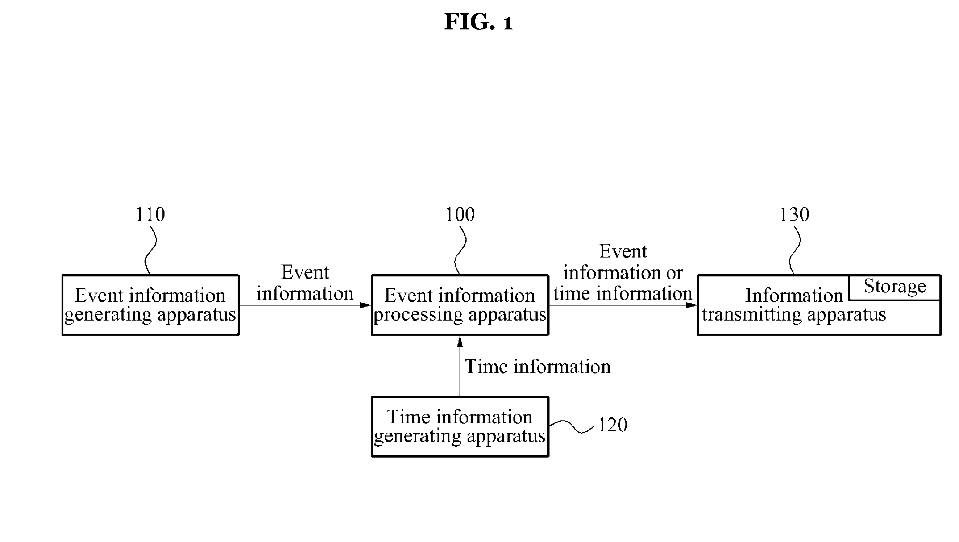

Hereinafter, exemplary embodiments will be described with reference to the accompanying drawings. FIG. 1 is a block diagram illustrating an event information processing system according to an exemplary embodiment.

The event information processing apparatus according to an exemplary embodiment may decrease an amount of event information to be transmitted by grouping event information which is generated at an identical time (or within a certain time; see below) by a device or a processor which outputs event information aperiodically, and by arranging the grouped event information to be associated with a single item of time information, for example, a single timestamp.

Referring to FIG. 1, the event information processing apparatus may include an event information processing apparatus 100, an event information generating apparatus 110, a time information generating apparatus 120, and an information transmitting apparatus 130.

The event information generating apparatus 110 may detect an event, may generate event information based on the detected event, and may transmit the generated event information to the event information processing apparatus 100. Here, the event information generating apparatus 110 may detect an event from information collected using a sensor or information input into a processor.

For example, when an arm of a user moves in an image photographed from the user, the event information generating apparatus 110 may detect the occurrence of an event from pixels which vary according to a motion of the arm of the user in the image. Here, the event information generating apparatus 110 may generate event information in response to the occurrence of the detected event. Event information generated by the event information generating apparatus 110 may include identification information of a pixel in which the event has occurred and information associated with a change in the pixel.

The event information generating apparatus 110 may receive an event from a sensor or a processor that outputs the event using an asynchronous scheme, may generate event information based on the received event, and may transmit the generated event information to the event information processing apparatus 100. For example, the sensor may be an event based sensor.

The time information generating apparatus 120 may periodically generate basic time information and may transmit the generated basic time information to the event information processing apparatus 100. Here, the time information generating apparatus 120 may generate basic time information independently from whether the event information generating apparatus 110 generates event information. The basic time information may include time information about a time at which the basic time information is generated. For example, the basic time information may be a time tick which is periodically generated per 10 microseconds (us).

The event information processing apparatus 100 may group event information generated at an identical time (or within a certain time; see below), and may arrange the grouped event information and basic time information and thereby transmit the arranged information to the information transmitting apparatus 130.

When additional event information is not generated during a period of time, the event information processing apparatus 100 may update basic time information with accumulated time information. The period of time may be predetermined. Here, the accumulated time information may be time information in which basic time information output during the period of time is accumulated. For example, the accumulated time information may include information associated with the number of items of basic time information which are generated by the time information generating apparatus 120 during the period of time.

The information transmitting apparatus 130 may output, to an outside of the system, event information and/or basic time information which are received from the event information processing apparatus 100.

The information transmitting apparatus 130 may include a storage (not shown) which may store event information and basic time information received from the event information processing apparatus 100, and a transceiver (not shown) which may convert the stored information to communication information and output the converted communication information. The storage may be, for example, a memory or a hard disk. Also, the storage may be a storage medium using a first input first output (FIFO) scheme. For example, the storage may store event information and basic time information in an order that the information is arranged by the event information processing apparatus 100, and may provide the stored event information and basic time information to the transceiver.

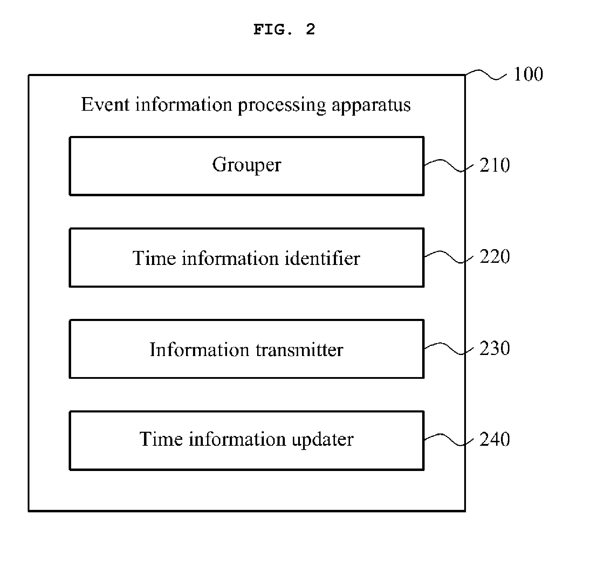

FIG. 2 is a block diagram illustrating a structure of the event information processing apparatus 100 according to an exemplary embodiment.

Referring to FIG. 2, the event information processing apparatus 100 includes a grouper 210, a time information identifier 220, an information transmitter 230, and a time information updater 240.

The grouper 210 may group at least one item of event information generated at an identical time (or within a certain time; see below).

For example, the grouper 210 may receive basic time information from the time information generating apparatus 120, and may receive event information from the event information generating apparatus 110. Here, the time information generating apparatus 120 may transmit basic time information periodically. The event information generating apparatus 110 may generate a plurality of items of event information and might not generate event information during the same period of time based on whether an event has occurred. That is, the event information generating apparatus 110 may generate the plurality of items of event information asynchronously, rather than periodically.

For example, the event information generating apparatus 110 may transmit a plurality of items of event information between intervals in which the time information generating apparatus 120 transmits basic time information. In this example, the grouper 210 may group a plurality of items of event information which are received until subsequent basic time information is received after current basic time information is received.

The time information identifier 220 may identify basic time information associated with event information grouped by the grouper 210.

For example, the time information identifier 220 may identify one of current basic time information and subsequent basic time information as basic time information associated with grouped event information, based on a setting. The setting may be set by a user or by a processor.

The information transmitter 230 may arrange and thereby transmit event information grouped by the grouper 210 and basic time information identified by the time information identifier 220.

For example, the information transmitter 230 may arrange the identified basic time information at the beginning of or at the end of the grouped event information and thereby transmit the basic time information.

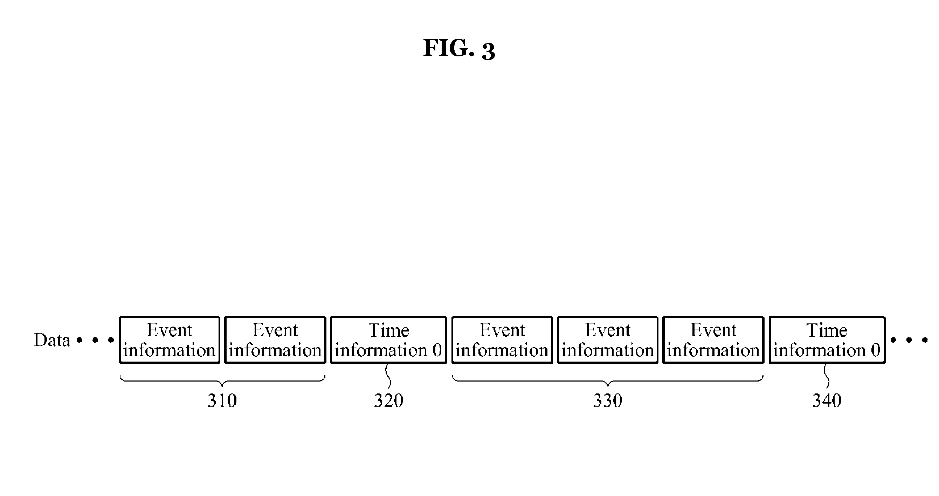

Hereinafter, a process of arranging, by the information transmitter 230, event information and basic time information will be further described with reference to FIG. 3.

When additional event information is not generated during a period of time, the information transmitter 230 may arrange basic time information output during the period of time in an output order.

For example, when the grouper 210 does not receive event information during a period of time, the information transmitter 230 may arrange a plurality of items of basic time information, which are received from the time information generating apparatus 120 by the grouper 210, in a reception order.

When additional event information is not generated during a period of time, the information transmitter 230 may request the time information updater 240 to update time information.

When additional event information is not generated during a period of time, the time information updater 240 may update basic time information output during the period of time with accumulated time information.

When an event does not occur, time information generated periodically may simply indicate elapse of a time and thus, may be information which is invalid as a result value. Accordingly, in the case in which event information is not received between time information and subsequent time information, the time information updater 240 may update the time information, thereby preventing an increase in a size of information which is to be processed due to invalid time information.

Here, the time information updater 240 may determine identification information of the accumulated time information based on the number of items of basic time information which are output during the period of time and are accumulated. The identification information is a value associated with the number of items of consecutive basic time information and may also be included in basic time information. Here, basic time information denotes information in which other basic time information is not accumulated and thus, a value of the identification information is "0". In accumulated time information, at least one other basic time information in addition to corresponding time information is accumulated and thus, a value of identification information may be "1" or more, depending on the number of basic time information that has been accumulated.

As one example, when the grouper 210 receives three items of basic time information during a period of time, the time information updater 240 may determine identification information of accumulated time information as "Tick 3". As another example, when the grouper 210 receives five items of basic time information during a period of time, the time information updater 240 may determine identification information of accumulated time information as "Tick 5". However, this scheme is only an example, and other methods of indicating the accumulated time may be used.

Further, the time information updater 240 may be configured as an apparatus separate from the event information processing apparatus 100. Here, the time information updater 240 may update a plurality of items of basic time information as at least one item of accumulated time information in response to a request of the information transmitter 230.

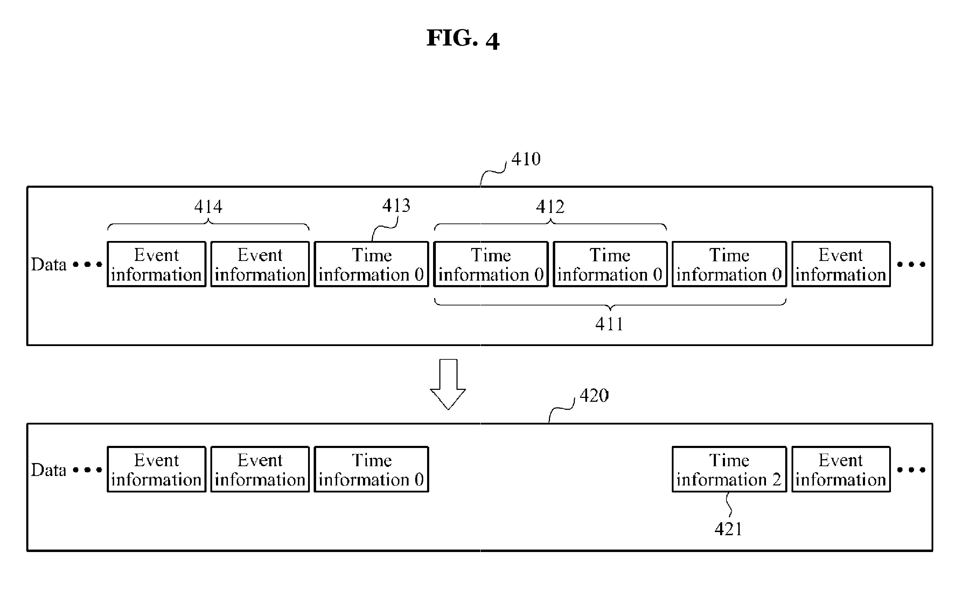

A process of updating, by the time information updater 240, time information will be described below with reference to FIG. 4.

FIG. 3 is a diagram illustrating an example of information transmitted by the event information processing apparatus 100 according to an exemplary embodiment.

As illustrated in FIG. 3, the event information processing apparatus 100 may arrange and thereby transmit a plurality of items of grouped event information 310 and 330 and a plurality of items of basic time information 320 and 340 associated with times at which the plurality of items of event information 310 and 330 are generated, respectively.

Here, each of the plurality of items of grouped event information 310 and 330 may be event information generated at an identical time or within a unit time of basic time information. The unit time of basic time information may be an interval at which the basic time information is generated. For example, the unit time of basic time information may be 10 us.

The event information 330 may include a group of a plurality of items of event information which are received until the basic time information 340 is received after the event information processing apparatus 100 receives the basic time information 320 from the time information generating apparatus 120.

For example, the event information processing apparatus 100 may decrease an amount of event information to be transmitted by grouping event information generated aperiodically by the event information generating apparatus 110, based on a generation time, and by arranging a single event information group to be associated with a single item of time information, for example, a single timestamp.

For example, in the case in which each of event information and time information includes 16 bits and event information close to 1 mega per second is generated, when matching each event information with a time at which the corresponding event information is generated, 1-mega time information identical to the number of items of event information may be used. Accordingly, the event information processing apparatus 100 may process 32-mega information per second according to Equation 1.

[Equation 1]

$$(16+16)*1,000,000 = 32,000,000$$

In the case of grouping event information based on time information generated per 10 us according to the exemplary embodiment, 100,0000 items of time information may be used regardless of the number of items of event information.

Accordingly, the event information processing apparatus 100 processes 17.6 mega information according to Equation 2.

[Equation 2]

$$16*1,000,000 +16*100,000 =17,600,000$$

Accordingly, the event information processing apparatus 100 may decrease a size of information to be processed by grouping event information based on time information which is periodically generated.

FIG. 4 is a diagram illustrating an example of a process of updating time information at the event information processing apparatus 100 according to an exemplary embodiment.

In operation 410, when an event does not occur during a period of time, the event information processing apparatus 100 may consecutively receive a plurality of items of basic time information 411.

In operation 420, the event information processing apparatus 100 may update the plurality of items of basic time information 411 with accumulated time information 421, based on the number of items of basic time information 411 which are consecutively received.

For example, referring to FIG. 4, three items of basic time information 411 are consecutively received and thus, the event information processing apparatus 100 may update the plurality of items of basic time information 411 with the accumulated time information 421 of which identification information is "2". Here, the identification information may indicate the number of items of basic time information 412 which are received before the accumulated time information 421, but are not transmitted during an updating process using the accumulated time information 421. Also, basic time information 413 is arranged with event information 414 and thereby transmitted. Accordingly, the basic time information 413 might not be updated with the accumulated time information 421.

When event information is not generated, the event information processing apparatus 100 may minimize a size of invalid time information by updating a plurality of items of time information with a single item of time information as illustrated in FIG. 4.

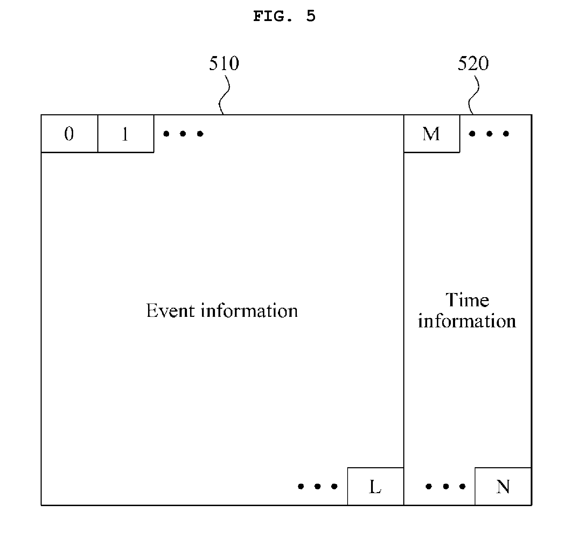

FIG. 5 is a diagram illustrating an example of event information and time information according to an exemplary embodiment.

FIG. 5 illustrates an example of event information 510 and time information 520 stored in the storage of the information transmitting apparatus 130. In FIG. 5, each of L, M, and N denotes an absolute value of a bit for storing information in the storage, and N>M>L. For example, the storage of the information transmitting apparatus 130 may store the event information 510 in an area from a 0th bit to an Lth bit, and may store the time information 520 in an area from an Mth bit to an Nth bit.

The event information 510 generated by the event information generating apparatus 110 may include information about a position at which an event has occurred, contents of the event, or a value which varies based on the event.

The time information 520 generated by the time information generating apparatus 120 may include identification information indicating a time at which basic time information is generated or the number of items of accumulated basic time information.

Here, a size of a storage medium for storing the time at which the basic time information is generated or the number of items of accumulated basic time information may be less than a size of storage media for storing information about the position at which the event occurs, contents of the event, or the value which varies based on the event.

Accordingly, the storage of the information transmitting apparatus 130 may assign the area for storing the event information 510 to be greater than the area for storing the time information 520. The storage of the information transmitting apparatus 130 may assign a size of an area to be different based on contents of the time information 520 or the event information 510.

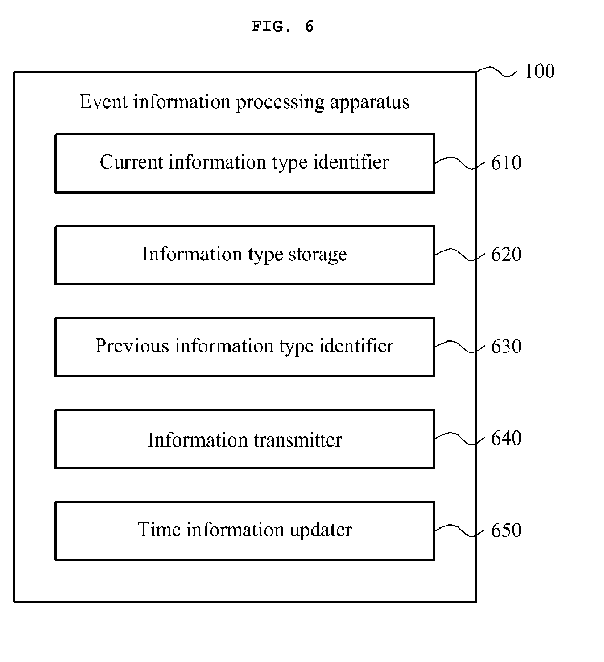

FIG. 6 is a block diagram illustrating a structure of the event information processing apparatus 100 according to another exemplary embodiment.

The event information processing apparatus 100 may receive event information and time information independently and thus, may receive the event information and the time information in four potential combinations.

FIG. 6 may illustrate a structure of the event information processing apparatus 100 which updates time information based on a type of received information or processes the updated time information.

Referring to FIG. 6, the event information processing apparatus 100 includes a current information type identifier 610, an information type storage 620, a previous information type identifier 630, an information transmitter 640, and a time information updater 650.

The current information type identifier 610 may identify a type of first information which is currently generated by the event information generating apparatus 110 or the time information generating apparatus 120 and is transmitted to the event information processing apparatus 100.

For example, when the first information is received from the event information generating apparatus 110, the current information type identifier 610 may identify the type of first information as event information. On the other hand, when the first information is received from the time information generating apparatus 120, the current information type identifier 610 may identify the type of first information as time information.

The information type storage 620 may sequentially store event information received from the event information generating apparatus 110 and time information received from the time information generating apparatus 120. Also, the information type storage 620 may store accumulated time information updated by the time information updater 650.

The previous information type identifier 630 may identify a type of second information which is generated previously by the event information generating apparatus 110 or the time information generating apparatus 120 and is transmitted to the event information processing apparatus 100.

Here, the second information may be information which is received by the event information generating apparatus 110 just before receiving the first information. Accordingly, the previous information type identifier 630 may extract the second information which is information received by the event information generating apparatus 110 just before receiving the first information, and may identify the type of the second information.

The information transmitter 640 may transmit the first information to the information transmitting apparatus 130 based on whether the type of first information is identical to the type of second information.

For example, when the type of first information is identical to the type of second information as event information, the information transmitter 640 may transmit the first information received from the event information generating apparatus 110 to the information transmitting apparatus 130 without performing an additional operation.

When the type of first information is time information and when the type of second information is event information, the information transmitter 640 may transmit the first information received from the time information generating apparatus 120 to the information transmitting apparatus 130 without performing an additional operation. In this example, the information transmitting apparatus 130 may transmit at least one item of event information including second information in conjunction with the first information which is time information.

When the type of first information is identical to the type of second information as time information, the information transmitter 640 might not transmit the first information and may request the time information updater 650 to update the time information. Here, even in the case in which the first information is basic time information and second information is accumulated time information, the information transmitter 640 may determine that the type of first information is identical to the type of second information as time information. That is, in the exemplary embodiment of FIG. 6, time information may be information excluding event information, and may include basic time information which is generated by the time information generating apparatus 120 and accumulated time information which updated by the time information updater 650. When the type of first information is event information and when the type of second information is time information, the information transmitter 640 may verify whether the second information is accumulated time information and then transmit the first information.

For example, when information received just before receiving event information is time information, the corresponding time information may be accumulated time information indicating a plurality of items of time information or may be basic time information indicating a single item of time information. Accordingly, the information transmitter 640 may verify whether second information stored in the information type storage 620 is accumulated time information, and may transmit first information to the information transmitting apparatus 130 when the second information is basic time information and not the accumulated time information.

On the contrary, when the second information is the accumulated time information, the information transmitter 640 may initially transmit the accumulated time information stored in the information type storage 620, prior to transmitting the first information, and may change the second information stored in the information type storage 620 with basic time information.

When the event information generating apparatus 100 consecutively receives a plurality of items of time information, the time information updater 650 may update the received plurality of items of time information with accumulated time information.

For example, when first time information is basic time information and when second information is basic time information, the time information updater 650 may verify whether third information received just before the second information is received by the information type storage 620 is event information.

In this example, when the third information is the event information, the second information is time information associated with the third information and thus, the time information updater 650 might not update the first information and the second information with the accumulated time information. When the third information is basic time information, the time information updater 650 may update the second information stored in the information type storage 620 with accumulated time information in which a single item of basic time information is accumulated.

Further, when first information is basic time information and when second information is accumulated time information, the time information updater 650 may indicate that a single item of basic time information is further accumulated by increasing, by "1", a value of identification information of second information indicating the number of items of accumulated basic time information.

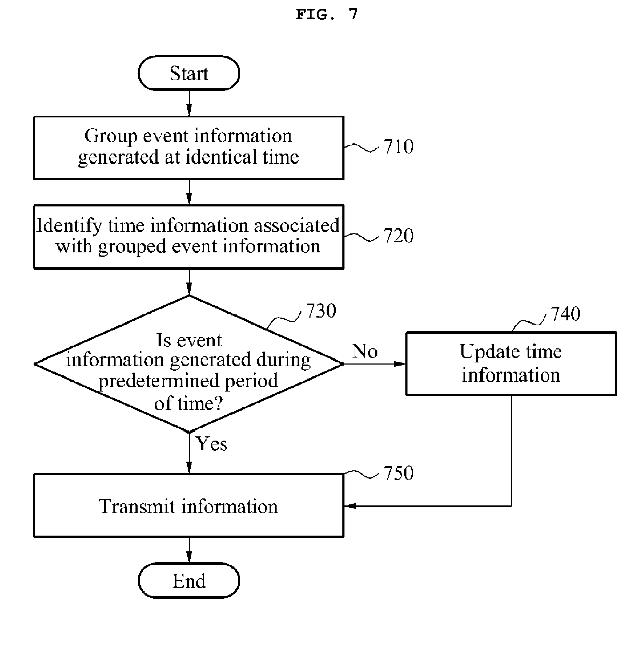

FIG. 7 is a flowchart illustrating a method of processing event information according to an exemplary embodiment.

In operation 710, the grouper 210 may group at least one item of event information generated at an identical time (or within a certain time).

For example, the grouper 210 may group a plurality of items of event information which are received until current basic time information is received after previous basic time information is received. Here, the previous basic time information may be basic time information generated just before the time information generating apparatus 120 generates the current basic time information.

In operation 720, the time information identifier 220 may identify basic time information associated with the grouped event information.

For example, the time information identifier 220 may identify current basic time information as basic time information associated with the event information grouped in operation 710.

In operation 730, the time information transmitter 230 may verify whether event information is generated during a period of time.

For example, when the grouper 210 does not receive event information during a period of time, the information transmitter 230 may determine that the event information generating apparatus 110 has not generated the event information during the period of time and may perform operation 740. The period of time may be a time interval at which the time information generating apparatus 120 generates basic time information.

When the grouper 210 consecutively receives basic time information, the information transmitter 230 may determine that event information is not generated during the period of time.

When the grouper 210 receives event information, the information transmitter 230 may transmit the event information in operation 730.

In operation 740, the time information updater 240 may update a plurality of items of basic time information, which are consecutively received by the grouper 210, with accumulated time information.

In this example, the time information updater 240 may determine identification information of accumulated time information, based on the number of items of basic time information which are consecutively received by the grouper 210. For example, when the grouper 210 consecutively receives three items of basic time information, the time information updater 240 may determine identification information of accumulated time information as "Tick 3". In operation 750, the information transmitter 230 may arrange and thereby transmit the event information grouped in operation 710 and the basic time information identified in operation 720.

When the grouper 210 consecutively receives basic time information, the information transmitter 230 may update a plurality of items of basic time information with a single item of accumulated time information and thereby transmit the updated information.

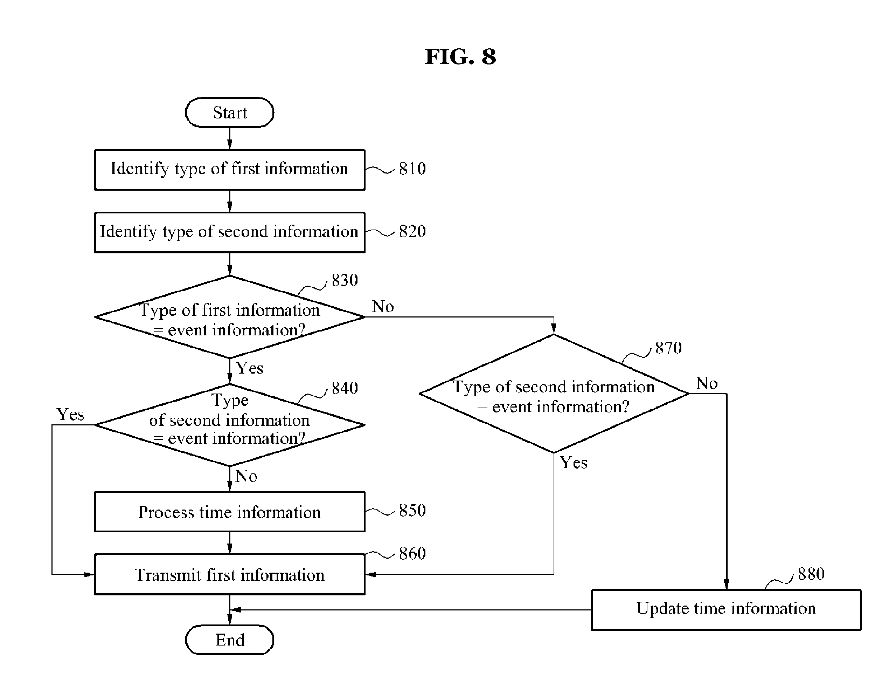

FIG. 8 is a flowchart illustrating a method of processing event information according to another exemplary embodiment.

In operation 810, the current information type identifier 610 may identify a type of first information which is currently generated by the event information generating apparatus 110 or the time information generating apparatus 120 and is transmitted to the event information processing apparatus 100.

For example, the current information type identifier 610 may identity the type of first information based on whether the first information is transmitted by the event information generating apparatus 110 or the time information generating apparatus 120.

In operation 820, the previous information type identifier 630 may identify a type of second information which is generated previously by the event information generating apparatus 110 or the time information generating apparatus 120 and is transmitted to the event information processing apparatus 100.

Here, the previous information type identifier 630 may extract, from the information type storage 620, the second information which is information received just before the current information type identifier 630 receives the first information, and may identify the type of second information.

In operation 830, the information transmitter 640 may verify whether the type of first information identified in operation 810 is event information.

When the type of first information is verified as the event information in operation 830, the information transmitter 640 may verify whether the type of second information is event information in operation 840.

When the type of second information is not the event information in operation 840, the information transmitter 640 may process time information in operation 850.

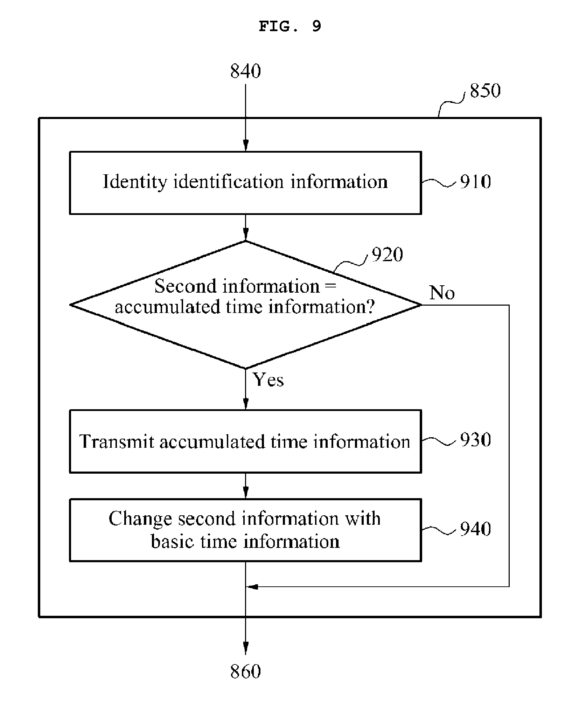

For example, the information transmitter 640 may verify identification information of second information and may process the second information based on the verified identification information and then perform operation 850. Operation 850 of processing time information will be further described below with reference to FIG. 9.

In operation 860, the information transmitter 640 may transmit, to the information transmitting apparatus 130, the first information received in operation 810.

Returning to operation 830, when the type of first information is not event information but time information in operation 830, the information transmitter 640 may verify whether the type of second information is event information in operation 870. When the type of second information is event information, the information transmitter 640 may transmit the first information to the information transmitting apparatus 130 in operation 860. Here, the information transmitting apparatus 130 may transmit at least one item of event information including second information in conjunction with first information which is time information.

When the type of second information is not event information but time information in operation 870, the information transmitter 640 may request the time information updater 650 to update time information instead of transmitting the first information in operation 880. Here, even in the case in which first information is basic time information and second information is accumulated time information, the information transmitter 640 may determine that the type of first information is identical to the type of second information as time information.

In this example, when the first information and the second information are basic time information, the time information updater 650 may verify whether third information received just before second information is received by the information type storage 620 is event information.

When the third information is event information, the time information updater 650 might not update the first information and the second information with accumulated time information. When the third information is basic time information, the time information updater 650 may update the second information stored in the information type storing time unit 620 with accumulated time information in which a single item of basic time information is accumulated.

Further, when first information is basic time information and when the second information is accumulated time information, the time information updater 650 may indicate that a single item of basic time information is further accumulated by increasing, by "1", a value of identification information of second information indicating the number of items of accumulated basic time information.

FIG. 9 is a flowchart illustrating in detail operation 850 of processing time information of FIG. 8. Here, operation 910 through operation 940 of FIG. 9 may be included in operation 850 of FIG. 8.

In operation 910, the information transmitter 640 may verify identification information of second information from the information type storage 620.

In operation 920, the information transmitter 640 may verify whether the identification information of second information verified in operation 910 is accumulated time information. When a value of the identification information is "0", the information transmitter 640 may determine that the second information is basic time information. When a value of the identification information is greater than or equal to "1", the information transmitter 640 may determine that the second information is accumulated time information.

When the second information is not accumulated time information but basic time information in operation 920, the information transmitter 640 may transmit the first information to the information transmitting apparatus 130 in operation 860.

When the second information is verified as accumulated time information in operation 920, the information transmitter 640 may initially transmit accumulated time information stored in the information type storage 620 to the information transmitting apparatus 130 in operation 930.

In operation 940, the information transmitter 640 may change second information stored in the information type storage 620 with basic time information. For example, the information transmitter 640 may change identification information of second information to "0".

The above-described exemplary embodiments may be recorded in non-transitory computer-readable media including program instructions to implement various operations embodied by a computer. The media may also include, alone or in combination with the program instructions, data files, data structures, and the like. Examples of non-transitory computer-readable media include magnetic media such as hard disks, floppy disks, and magnetic tape; optical media such as CD ROM disks and DVDs; magneto-optical media such as optical disks; and hardware devices that are specially configured to store and perform program instructions, such as read-only memory (ROM), random access memory (RAM), flash memory, and the like. Examples of program instructions include both machine code, such as produced by a compiler, and files containing higher level code that may be executed by the computer using an interpreter. The described hardware devices may be configured to act as one or more software modules in order to perform the operations of the above-described exemplary embodiments, or vice versa.

A number of exemplary embodiments have been described above. Nevertheless, it should be understood that various modifications may be made. For example, suitable results may be achieved if the described techniques are performed in a different order and/or if components in a described system, architecture, device, or circuit are combined in a different manner and/or replaced or supplemented by other components or their equivalents. Accordingly, other implementations are within the scope of the following claims.

**Claims**

1. An apparatus for processing event information, the apparatus comprising:

   a grouper which groups at least one item of event information generated at an identical time;
   a time information identifier which identifies basic time information associated with the grouped event information; and
   an information transmitter which arranges and thereby transmits the grouped event information and basic time information.

2. The apparatus of claim 1, wherein when additional event information is not generated during a period of time, the information transmitter arranges basic time information, which is output during the period of time, in an output order.

3. The apparatus of claim 1 or 2, further comprising:

a time information updater which updates basic time information output during a period of time with accumulated time information, when additional event information is not generated during the period of time.

4. The apparatus of claim 3, wherein the time information updater determines identification information of the accumulated time information based on the number of items of basic time information which are output during the period of time and are accumulated.

5. The apparatus of any of claims 1-5, wherein the at least one item of event information is output by a sensor or a processor that outputs an event using an asynchronous scheme.

6. A method of processing event information, the method comprising:

grouping at least one item of event information generated at an identical time;
identifying basic time information associated with the grouped event information; and
arranging and thereby transmitting the grouped event information and basic time information.

7. The method of claim 6, wherein the arranging and thereby transmitting comprises arranging basic time information, which is output during a period of time, in an output order, when additional event information is not generated during the period of time.

8. The method of claim 6 or 7, further comprising:

updating basic time information output during a period of time with accumulated time information, when additional event information is not generated during the period of time.

9. The method of claim 8, wherein the updating comprises determining identification information of the accumulated time information based on the number of items of basic time information which are output during the period of time and are accumulated.

10. An apparatus for processing event information, the apparatus comprising:

a current information type identifier which identifies a type of first information currently generated;
a previous information type identifier which identifies a type of second information generated prior to the first information; and
an information transmitter which transmits the first information based on whether the type of first information is identical to the type of second information,
wherein the type of first information and the type of second information are one of event information and time information.

11. The apparatus of claim 10, wherein preferably when the type of first information and the type of second information are event information, the information transmitter transmits the first information without performing an additional operation,
wherein preferably when the type of first information is time information, and when the type of second information is event information, the information transmitter transmits the first information without performing an additional operation,
wherein preferably when the type of first information is event information, and when the type of second information is time information, the information transmitter verifies whether the second information is accumulated time information in which basic time information output during a predetermined period of time is accumulated, and then transmits the first information,
wherein preferably when the second information is the accumulated time information, the information transmitter initially transmits the second information prior to transmitting the first information and changes the second information as basic time information,
wherein preferably when the type of first information and the type of second information are time information, the information transmitter accumulates the first information and the second information and thereby updates accumulated time information.

12. A method of processing event information, the method comprising:

identifying a type of first information currently generated;

identifying a type of second information generated prior to the first information; and

transmitting the first information based on whether the type of first information is identical to the type of second information,

wherein the type of first information and the type of second information are one of event information and time information.

13. The method of claim 12, wherein preferably the transmitting comprises transmitting the first information without performing an additional operation when the type of first information and the type of second information are event information,

wherein preferably the transmitting comprises transmitting the first information without performing an additional operation when the type of first information is time information, and when the type of second information is event information,

wherein preferably the transmitting comprises verifying whether the second information is accumulated time information in which basic time information output during a period of time is accumulated and then transmitting the first information when the type of first information is event information, and when the type of second information is time information,

wherein preferably the transmitting comprises initially transmitting the second information prior to transmitting the first information and changing the second information as basic time information when the second information is the accumulated time information,

wherein preferably the transmitting comprises accumulating the first information and the second information and thereby updating accumulated time information when the type of first information and the type of second information are time information.

14. A non-transitory computer-readable recording medium storing a program to implement a method according to any of claims 6-9, 12 and/or 13.

15. The apparatus of claim 1, wherein the event information is asynchronous information and the basic time information is periodic information,

wherein preferably the grouper groups at least two items of event information.

wherein preferably the grouper groups items of event information generated in a time period.

# FIG. 1

EP 2 672 386 A2

FIG. 2

## FIG. 3

| Data ••• | Event information | Event information | Time information 0 | Event information | Event information | Event information | Time information 0 | ••• |

310       320       330       340

## FIG. 4

EP 2 672 386 A2

FIG. 5

510

520

| 0 | 1 | • • • | | M | • • • |

Event information

Time information

• • • L

• • • N

FIG. 6

Event information processing apparatus ~ 100

Current information type identifier — 610

Information type storage — 620

Previous information type identifier — 630

Information transmitter — 640

Time information updater — 650

FIG. 7

```
                    ┌─────────────┐
                    │    Start    │
                    └─────────────┘
                           │
                           ▼
        ┌──────────────────────────────────┐
        │   Group event information         │  ⌒ 710
        │   generated at identical time     │
        └──────────────────────────────────┘
                           │
                           ▼
        ┌──────────────────────────────────┐
        │ Identify time information associated│ ⌒ 720
        │   with grouped event information  │
        └──────────────────────────────────┘
                           │
                           ▼
                                    730              740
                   ◇                              ┌──────────────┐
              Is event                     No     │  Update time │
    information generated during ─────────────────│  information │
         predetermined period                     └──────────────┘
              of time?                                    │
                   ◇                                      │
                   │ Yes                                  │
                   ▼                      750             │
        ┌──────────────────────────────────┐             │
        │      Transmit information         │ ⌒     ◄─────┘
        └──────────────────────────────────┘
                           │
                           ▼
                    ┌─────────────┐
                    │     End     │
                    └─────────────┘
```

**FIG. 8**

Start

→ Identify type of first information — 810

→ Identify type of second information — 820

→ Type of first information = event information? — 830

- No → Type of second information = event information? — 870
  - Yes → Update time information — 880 → End
  - No → Update time information / End

- Yes → Type of second information = event information? — 840
  - No → Process time information — 850 → Transmit first information — 860 → End
  - Yes → Transmit first information — 860 → End

FIG. 9

840

850

Identity identification information ~910

Second information =
accumulated time information? ~920

No

Yes

Transmit accumulated time information ~930

Change second information with
basic time information ~940

860